# EUROPÄISCHE PATENTANMELDUNG

(11) **EP 4 714 746 A1**
(43) Veröffentlichungstag der Anmeldung: **25.03.2026**
(21) Anmeldenummer: 25199717.7
(22) Anmeldetag: 02.09.2025
(51) Int. Cl.: B60Q 3/80, B60Q 3/74

(54) **SYSTEM UND VERFAHREN ZUR STEUERUNG EINER FAHRZEUGINNENBELEUCHTUNG**

(30) Priorität: 24.09.2024 DE 102024209165
(71) Anmelder: Stellantis Auto SAS, 78300 Poissy (FR)
(72) Erfinder: BLUM, JOHANNES, 65428 RÜSSELSHEIM AM MAIN (DE); WANDTNER, Bernhard, 65428 RÜSSELSHEIM AM MAIN (DE); ELENGUEBAWY, MARYAM, 65428 RÜSSELSHEIM AM MAIN (DE); VRINAT, DAVID, 65428 RÜSSELSHEIM AM MAIN (DE); HICKMANN, JAN, 65428 RÜSSELSHEIM AM MAIN (DE)
(74) Vertreter: ESIP

(57) **Zusammenfassung**

Die vorliegende Offenbarung betrifft ein Steuerungssystem für eine Beleuchtungseinrichtung (10) im Fahrzeuginnenraum (2) eines Fahrzeugs (1). Das System umfasst wenigstens ein Fahrzeugsteuergerät (11) und eine mit dem Fahrzeugsteuergerät (11) verbundene Auswahleinrichtung (40). Das Fahrzeugsteuergerät (11) ist ausgebildet, Positionsdaten (POS) über eine aktuelle geografische Position des Fahrzeugs (1) zu ermitteln (102) und an die Auswahleinrichtung (40) zu kommunizieren. Die Auswahleinrichtung (40) ist ausgebildet, zu den Positionsdaten (POS) ein Satelliten- und/oder Luftbild (IMG) von einer Geodatenbank (20) abzurufen und wenigstens einen Bildbereich (52, 53) einer abgebildeten Umgebung zu klassifizieren (102), die eine Bildposition (50) zu den Positionsdaten (POS) umgibt. Die Auswahleinrichtung (40) ist ferner ausgebildet, basierend auf dem wenigstens einen klassifizierten Bildbereich (52, 53) ein Beleuchtungsschema für die Beleuchtungseinrichtung (10) auszuwählen (103). Die vorliegende Offenbarung betrifft ferner ein Verfahren zur Steuerung der Beleuchtungseinrichtung (10) sowie ein Computerprogramm zur Ausführung des Verfahrens.

## Beschreibung

### Technisches Gebiet

Die Erfindung betrifft ein System und ein Verfahren zur Steuerung einer Fahrzeuginnenbeleuchtung, insbesondere einer ambienten Beleuchtung mit einem anpassbaren Lichtfarbton.

Aus der DE 10 2023 100 206 A1 ist ein System und ein Verfahren zur Erzeugung einer Beleuchtungsatmosphäre in einem Fahrzeug bekannt, wobei eine ambiente Beleuchtung entsprechend einer Beleuchtungsszene angesteuert wird, die farblich an eine Umgebung des Fahrzeugs angepasst ist. Die Beleuchtungsszene kann basierend auf einem aktuellen Standort des Fahrzeugs von einem Fahrzeugnavigationssystem bereitgestellt bzw. ausgewählt werden. Alternativ kann eine äußere Lichtszene mit einer Umfeldsensorik des Fahrzeugs erfasst werden, so dass eine farblich angepasste Beleuchtungsszene abgeleitet wird. Die ermittelten Daten können auf einem Server für andere Fahrzeuge bereitgestellt werden.

Der Erfindung liegt das Problem zugrunde, dass eine kamerabasierte Erkennung der Umgebung fehleranfällig und wenig zuverlässig ist, da ein Farbprofil der Kamera durch Sonnenlichteinstrahlung oder durch Verschmutzung der Kameralinse beeinträchtigt werden kann. Dementsprechend sind auch Attribute in kartenbasierten Daten zur Ansteuerung einer ambienten Beleuchtung nicht zuverlässig, die ursprünglich mittels einer kamerabasierten Umfeldsensorik ermittelt worden sind.

### Kurzbeschreibung der Erfindung

Vor diesem Hintergrund liegt der Erfindung die Aufgabe zugrunde, eine alternative Detektionsmethode für eine Lichtszene einer Fahrzeugumgebung bereitzustellen, so dass ein Farbton eines ambienten Lichts auf die Fahrzeugumgebung angepasst werden kann.

Vorgeschlagen wird dementsprechend ein Steuerungssystem gemäß dem Hauptanspruch sowie ein Verfahren und ein Computerprogramm gemäß den Nebenansprüchen. Weiterführende Ausgestaltungen sind Gegenstand der jeweils abhängigen Ansprüche.

Gemäß einem ersten Aspekt der Erfindung wird die Aufgabe gelöst durch ein Steuerungssystem für eine Beleuchtungseinrichtung in einem Fahrzeuginnenraum eines Fahrzeugs.

Das Steuerungssystem umfasst wenigstens ein Fahrzeugsteuergerät und einer mit dem Fahrzeugsteuergerät verbundenen Auswahleinrichtung. Das Fahrzeugsteuergerät ist ausgebildet, Positionsdaten über eine aktuelle geografische Position des Fahrzeugs zu ermitteln und an die Auswahleinrichtung zu kommunizieren.

Die Positionsdaten können beispielsweise durch einen Signalempfänger eines globalen Navigationssatellitensystems (engl. global navigation satellite system, GNSS) bestimmt und an das Fahrzeugsteuergerät weitergeleitet werden. Die Geodatenbank kann außerhalb des Fahrzeugs beispielsweise auf einem Server im einem fahrzeugexternen Netzwerk gehostet sein.

Die Auswahleinrichtung kann als Softwarekomponente ausgestaltet sein, die auf dem Fahrzeugsteuergerät oder cloudbasiert auf einem Server innerhalb des Netzwerks ausführbar ist. Die Softwarekomponente kann alternativ modulartig aufgebaut sein, so dass einzelne Softwaremodule verteilt zwischen dem Fahrzeugsteuergerät und ein oder mehreren Rechnern innerhalb des fahrzeugexternen Netzwerks verteilt ausführbar sind.

Die Auswahleinrichtung ist ferner ausgebildet, zu den Positionsdaten ein Satelliten- und/oder Luftbild von einer Geodatenbank abzurufen und wenigstens einen Bildbereich einer abgebildeten Umgebung zu klassifizieren, die eine Bildposition zu den Positionsdaten im Satelliten- und/oder Luftbild umgibt.

Die Auswahleinrichtung kann ein Klassifizierungsmodul besitzen, das eine Mustererkennung zum Erkennen oder Verstehen von Bildern umfasst, die auf Methoden des maschinellem Lernens insbesondere unter Verwendung eines neuronalen Netzes beruhen kann. Eine bildliche Wiedergabe der jeweiligen Umgebung ist beispielsweise durch Farbe und Textur gekennzeichnet, so dass darauf basierend eine Kategorisierung möglich ist.

Die Auswahleinrichtung ist ferner ausgebildet, basierend auf einer klassifizierten Umgebung ein Beleuchtungsschema für die Beleuchtungseinrichtung auszuwählen.

Die Auswahleinrichtung kann ein Auswahlmodul besitzen, dass aus einer Beleuchtungsschemendefinition einen Beleuchtungsschemadatensatz abruft, der einer festgestellten Umgebungsklasse zugeordnet ist.

Eine Idee hinter der vorliegenden Erfindung ist, dass eine Umgebungserkennung auf einer Bildanalyse eines Satelliten- und/oder Luftbilds beruht, dass von einer Geodatenbank beispielsweise aus dem Internet abrufbar ist. Die Satelliten- und/oder Luftbilder sind unabhängig von einer aktuellen Witterung und unabhängig vom optischen Zustand einer kamerabasierten Fahrzeugsensorik zur Umfeldperzeption.

Eine aufwändige Kalibrierung des Farbprofils einer jeweiligen Kamera zur Erfassung eines Fahrzeugumfeldes für verschiedene Fahrzeugtypen kann entfallen. Ferner wird eine farblich angepasste ambiente Beleuchtung auch bei Fahrzeugen ohne ein Kamerasystem zur Erfassung einer aktuellen Fahrzeugumgebung realisierbar.

Gemäß einer Weiterbildung des Steuerungssystems kann die Auswahleinrichtung ausgebildet sein, ein aktuelles Kalenderdatum zu ermitteln und das ausgewählte Beleuchtungsschema basierend auf dem ermittelten Kalenderdatum zu modifizieren.

Durch diese Weiterbildung kann berücksichtigt werden, dass eine landschaftliche Umgebung einer jahreszeitlichen Änderung unterworfen sein kann, die sich auf eine optische Wahrnehmung der betreffenden Umgebung insbesondere hinsichtlich einer Lichtfarbe auswirken kann.

Gemäß einer Weiterbildung des Steuerungssystems kann die Auswahleinrichtung ausgebildet sein, eine aktuelle Tageszeit zu ermitteln und das ausgewählte Beleuchtungsschema basierend auf der ermittelten Tageszeit zu modifizieren.

Durch diese Weiterbildung kann berücksichtigt werden, dass sich eine Umgebungslichtszene an einer bestimmten Geoposition im Tagesverlauf ändert.

Gemäß einer Weiterbildung des Steuerungssystem kann die Auswahleinrichtung ausgebildet sein, eine Umgebungstemperatur an der aktuellen geografischen Position des Fahrzeugs zu ermitteln und die ausgewählte Beleuchtungsszene basierend auf der ermittelten Umgebungstemperatur zu modifizieren.

In dem ausgewählten Beleuchtungsschemadatensatz können für eine jeweilige Modifikation basierend auf dem Kalenderdatum, der Tageszeit und/oder der Umgebungstemperatur unterschiedliche Daten für modifizierte Beleuchtungsschemen enthalten sein. Eine Modifikation des Beleuchtungsschema kann durch Auswahl entsprechender Daten erfolgen.

Alternativ und/oder ergänzend kann beispielsweise eine optische Erscheinung der Umgebung um die aktuelle geografische Position des Fahrzeugs mittels Methoden des maschinellen Lernens angepasst werden. Basierend auf einer festgestellten Umgebungsklasse kann in Verbindung mit den Informationen über Kalenderdatum, Tageszeit, Umgebungstemperatur und/oder die aktuelle geografische Position ein Basisbeleuchtungsschema durch ein erlerntes Modifizierungsmodell modifiziert werden.

Nach einem zweiten Aspekt der Erfindung wird die Aufgabe gelöst durch ein Verfahren zur Steuerung einer Beleuchtungseinrichtung im Fahrzeuginnenraum eines Fahrzeugs.

Positionsdaten über eine aktuelle geografische Position des Fahrzeugs werden ermittelt. Ferner wird zu den Positionsdaten ein zugehöriges Satelliten- und/oder Luftbild abgerufen. In dem Satelliten- und/oder Luftbild wird wenigstens ein Bildbereich einer Umgebung klassifiziert, wobei der Bildbereich eine den Positionsdaten zugeordnete Bildposition des Satelliten- und/oder Luftbilds umgibt. Basierend auf dem wenigstens einen klassifizierten Bildbereich wird ein Beleuchtungsschema für die Beleuchtungseinrichtung ausgewählt.

Gemäß einer Weiterbildung des Verfahrens kann ein aktuelles Kalenderdatum ermittelt werden, wobei das ausgewählte Beleuchtungsschema basierend auf dem ermittelten Kalenderdatum modifiziert werden kann.

Gemäß einer Weiterbildung des Verfahrens kann eine aktuelle Tageszeit ermittelt werden, wobei das ausgewählte Beleuchtungsschema basierend auf der ermittelten Tageszeit modifiziert werden kann.

Gemäß einer Weiterbildung des Verfahrens kann eine Umgebungstemperatur an der aktuellen geografischen Position des Fahrzeugs ermittelt werden, und wobei das ausgewählte Beleuchtungsschema basierend auf der ermittelten Umgebungstemperatur modifiziert werden kann.

Nach einem weiteren Aspekt der Erfindung wird die Aufgabe gelöst durch ein Computerprogramm, das beim Ausführen auf einer Recheneinheit innerhalb eines Fahrzeugsteuergeräts eines Fahrzeugs und/oder innerhalb eines mit dem Fahrzeugsteuergerät verbundenen Netzwerks ausgeführt wird, die jeweiligen Recheneinheiten anleitet, ein Verfahren gemäß dem zweiten Aspekt der Erfindung auszuführen.

### Kurze Beschreibung der Zeichnungsfiguren

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen. Dabei zeigen:
- Figur 1: zeigt ein Steuerungssystem für eine Beleuchtungseinrichtung im Fahrzeuginnenraum eines Fahrzeugs;
- Figur 2: zeigt ein Flussdiagramm eines Verfahrens zur Steuerung der Beleuchtungseinrichtung;
- Figur 3: zeigt ein Satelliten- und/oder Luftbild einer Umgebung um eine aktuelle geografische Position des Fahrzeugs.

### Beschreibung der Ausführungsarten

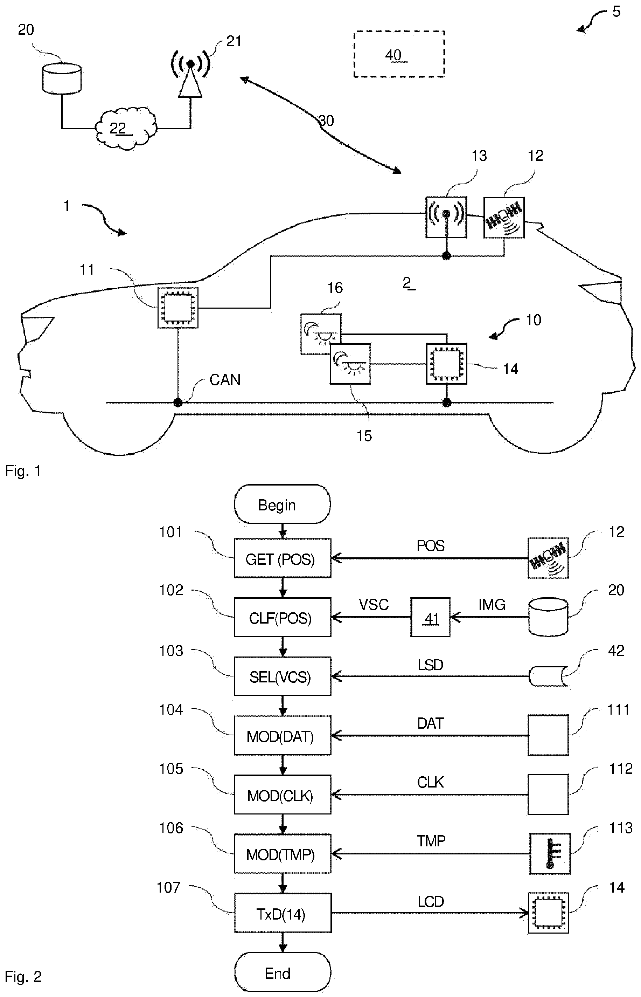

In der Figur 1 ist ein Steuerungssystem 5 zur Steuerung einer Beleuchtungseinrichtung 10 in einem Fahrzeuginnenraum 2 eines Fahrzeuges 1 dargestellt. Die Beleuchtungseinrichtung 10 beinhaltet exemplarisch eine erste und zweite Leuchtbaugruppe 15 und 16, die eine ambiente Beleuchtung für den Fahrzeuginnenraum 2 bereitstellt. Die erste Leuchtgruppe 15 ist beispielsweise an einer linken Fahrzeuginnenraumseite befestigt angeordnet. Die zweite Leuchtbaugruppe 16 ist an einer rechten Fahrzeuginnenraumseite befestigt angeordnet.

Die Leuchtbaugruppen 15 und 16 besitzen beispielsweise jeweils eine Vielzahl von RGB-Leuchtdioden (LED), die matrixartig in Zeilen und Spalten angeordnet sind. Die RGB-LED sind zeilen- und/oder spaltenweise ansteuerbar, so dass ein Licht in den Fahrzeuginnenraum 2 abgegeben werden kann, das zumindest gruppenweise bezüglich Farbe und Helligkeit variierbar ist. Die RGB-LED können in einem Verkleidungsbauteil der Fahrzeugtüren integriert angeordnet sein und eine ambiente Beleuchtung mit voreingestellten Farbkombinationen bereitstellen.

Die Beleuchtungseinrichtung 10 umfasst ferner wenigstens ein Beleuchtungssteuergerät 14, das basierend von Lichtsteuerungsdaten LCD (engl. lighting control data) die RGB-LED einzeln oder gruppenweise ansteuern kann. Die Lichtsteuerungsdaten LCD werden über ein Fahrzeugkommunikationsnetzwerk CAN (engl. controller area network) von einem Fahrzeugsteuergerät beispielsweise von einem Infotainmentsystem 11 empfangen.

Das Infotainmentsystem 11 ist mit einer zugeordneten Positionsbestimmungseinrichtung 12, d.h. mit einem GNSS-Signalempfänger sowie mit einer Mobilfunkeinrichtung 13 verbunden. Das Infotainmentsystem 11 ist im Zusammenwirken mit der Positionsbestimmungseinrichtung 12 ausgebildet, Positionsdaten POS über eine aktuelle geografische Position des Fahrzeugs 1 zu ermitteln und diese über Mobilfunkeinrichtung 13 an einen Server in einem fahrzeugexternen Netzwerk 22 (z.B. im öffentlichen Internet) zu kommunizieren.

Das Steuerungssystem 5 umfasst ferner eine Auswahleinrichtung 40, die ausgebildet ist, ein ambientes Licht der Beleuchtungseinrichtung 10 im Fahrzeuginnenraum 2 an eine äu-ßere Umgebung einer aktuellen geografischen Position des Fahrzeugs 1 anzupassen. Die Auswahleinrichtung 40 kann als eine einteilige Softwarekomponente auf dem Infotainmentsystem 11 eingebettet sein. Alternativ kann eine modulare Software zwischen Infotainmentsystem 11 und einem oder mehreren Servern in dem fahrzeugexternen Netzwerk 22 verteilt bereitgestellt und ausgeführt werden.

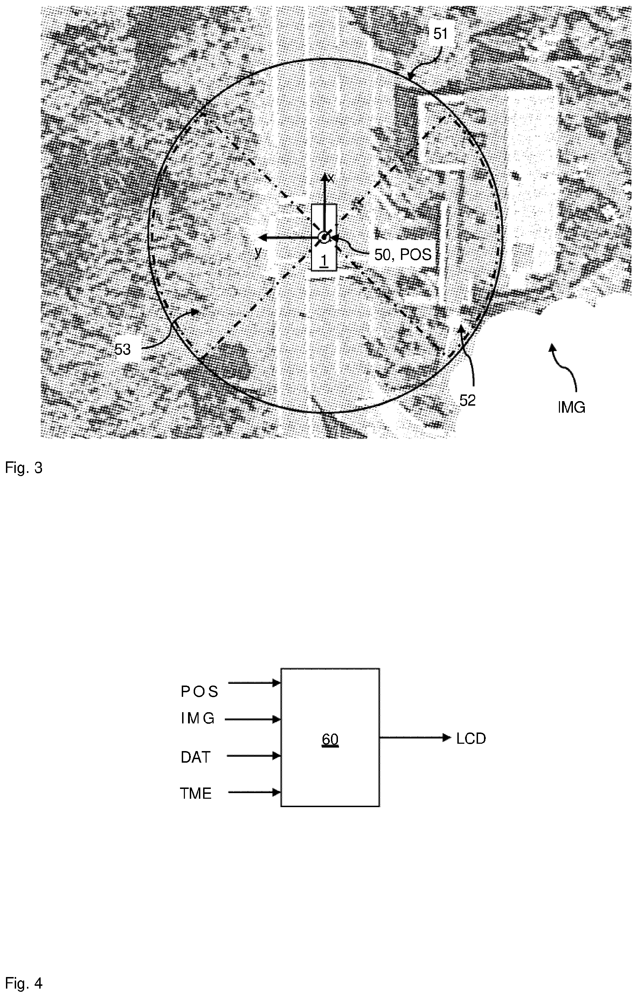

Nachfolgend wird anhand der Figuren 2 und 3 ein Ablauf eines Verfahrens zur Steuerung der Beleuchtungseinrichtung 10 beschrieben. Die Auswahleinrichtung 40 ist exemplarisch als eine Softwareeinheit in dem Infotainmentsystem 11 eingebettet. Die Figur 2 zeigt ein Flussdiagramm mit einer möglichen Verfahrensschrittabfolge des Verfahrens.

In einem ersten Schritt 101 werden von dem Infotainmentsystem 11 Positionsdaten POS über eine aktuelle geografische Position des Fahrzeugs 1 ermittelt, indem entsprechende Daten von dem GNSS-Signalempfänger 12 durch einen Befehl ("GET") abgerufen werden.

In einem zweiten Schritt 102 wird basierend auf den ermittelten Positionsdaten POS zunächst ein Satelliten- und/oder Luftbild IMG von einer Geodatenbank 20 abgerufen. Dazu werden die Positionsdaten POS über eine mobile Datenverbindung 30 zwischen der Mobilfunkeinrichtung 13 und einer Basisstation 21 sowie über das Netzwerk 22 an einen Server der Geodatenbank 20 übermittelt, der ein Satelliten- und/oder Luftbild IMG zu den Positionsdaten POS returniert.

Die Figur 3 zeigt ein Luftbild IMG mit einer Umgebung 51 um eine Bildposition 50, die einer aktuellen geografischen Position des Fahrzeugs 1 entspricht. Zu den Positionsdaten POS kann zusätzlich eine Fahrtrichtungsinformation übermittelt worden sein, so dass das Luftbild IMG fahrtrichtungsweisend ausgerichtet sein kann.

Wie dem Luftbild IMG zu entnehmen ist, fährt das Fahrzeug 1 auf einer Straßen zwischen einem Waldgebiet (links im Bild) und einer Ortschaft mit einem Gebäude (rechts im Bild). Die softwarebasierte Auswahleinrichtung 40 auf dem Infotainmentsystem 11 umfasst einen Klassifikator 41 z.B. mit einem tiefen neuronalen Netz, das auf eine Klassifizierung eines rechten und linken Bildbereichs 52 und 53 der Umgebung 51 trainiert ist.

Die trainierten Umgebungsklassen können eine Innenstadt-, eine Vorortsumgebung, eine landwirtschaftliches Gebiet oder ein Waldgebiet, eine Gebirgslandschaft, eine See- oder Meeresnaheumgebung und viele weitere umfassen.

Gemäß dem Beispiel der Figur 3 wird der rechte Bildbereich 52 als eine Vorortsumgebung und der linke Bildbereich 53 als ein Waldgebiet klassifiziert. Der Klassifikator 41 gibt entsprechen die Fahrzeugumgebungsklassen VSC (engl. vehicle surrounding class) "Vorort" für die rechte Fahrzeugseite und "Wald" für die linke Fahrzeugseite zurück.

In einem dritten Schritt 103 wird basierend auf den Fahrzeugumgebungsklassen VSC jeweils ein Beleuchtungsschemadatensatz LSD (engl. lighting scheme dataset) aus einer fahrzeugspezifischen Beleuchtungsschemendefinition 42 ausgewählt (Befehl "SEL" (engl. select)).

Die Beleuchtungsschemadatensätze LSD können jeweils ein Basisbeleuchtungsschema für ein "Vorort" bzw. "Wald" enthalten, das in dem vierten bis sechsten Schritt 104, 105 und 106 modifiziert ("MOD") werden kann.

Im vierten Schritt 104 wird eine aktuelles Datum DAT ermittelt, dass eine jahreszeitliche Anpassung ermöglicht. Ein "Vorort"-Basisbeleuchtungsschema ist im Wesentlichen nicht von einer Jahreszeit abhängig, so dass keine Modifikation erfolgt. Für das "Wald"-Basisbeleuchtungsschema muss ggf. ein jahreszeitabhängiger Belaubungsstatus von Bäumen berücksichtigt werden, der einen Einfluss auf die farblich-visuelle Wahrnehmung einer Waldumgebung haben kann.

In einem nachfolgenden fünften Schritt 105 wird eine aktuelle Tageszeit TME ermittelt, so dass das ausgewählte Basisbeleuchtungsschema basierend auf der ermittelten Tageszeit TME modifiziert werden kann.

Die tageszeitabhängigen Lichtverhältnisse an einem bestimmten Ort sind im Allgemeinen nicht nur von der Tageszeit, sondern auch von dem Kalendertag und der geografischen Position des Ortes abhängig. Daher können ergänzend zur Tageszeit TME ferner das aktuelle Datum DAT und die Positionsdaten POS bei der Modifikation berücksichtigt werden.

Die Zeit TME und das Datum DAT können zusammen mit den Positionsdaten POS aus dem GNSS-Signal ermittelt werden, so dass diese Daten im Rahmen des erfindungsgemäßen Verfahrens als ein zusammenhängender Datensatz ermittelt, bereitgestellt, kommuniziert und/oder verarbeitet werden kann.

In einem optionalen sechsten Schritt 106 kann eine Modifikation des ausgewählten Basisbeleuchtungsschemas basierend auf einer ermittelten Umgebungstemperatur TMP erfolgen.

In einem abschließenden siebten Schritt 107 werden basierend auf einem finalen Beleuchtungsschema Lichtsteuerungsdaten LCD (engl. lighting control data) erzeugt und von dem Infotainmentsystem 11 auf dem Fahrzeugkommunikationsnetzwerk CAN als eine CAN-Nachricht versendet TxD (engl. transmit data). Das Beleuchtungssteuergerät 14 steuert die Leuchtbaugruppen 15 und 16 zur Wiedergabe eines ambienten Lichtmusters an, das an die äußere Fahrzeugumgebung farblich angepasst ist.

Eine Regelung einer Beleuchtungshelligkeit der Leuchtbaugruppen 15 und 16 kann basierend auf einem Umgebungslichtsensor beruhen.

Mit dem Lichtsteuerungsdaten LCD kann ein individuelles Lichtmuster beschrieben werden. Alternativ oder ergänzend kann ein bestimmtes Lichtmuster aus einer Anzahl von vordefinierten Lichtmustern des Beleuchtungssteuergeräts 14 ausgewählt werden.

Die Beleuchtungsschemadatensätze LSD können alternativ zu einem Basisbeleuchtungsschema eine Anzahl modifizierter Beleuchtungsschemen beschreiben, so dass die Modifikationen des vierten bis sechsten Schritts 104 bis 106 im Wesentlichen auf einer Auswahl aus der Anzahl modifizierter Beleuchtungsschemen beruht.

Wie in der Figur 4 skizziert, können die Schritte 102 bis 106 zu einem Klassifizierungs- und Modifizierungsschritt zusammengefasst werden. Ein Modell, das mit Methoden des maschinellen Lernens trainiert worden ist, können die Lichtsteuerungsdaten LCD unmittelbar aus den Eingangsdaten erzeugt werden, die die Positionsdaten POS, das Satelliten- und/oder Luftbild IMG, die Tageszeit TME sowie das Datum DAT umfassen.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

**Liste der Bezugszeichen**

| | |
|---|---|
| 1 | Fahrzeug |
| 2 | Fahrzeuginnenraum |
| 5 | Steuerungssystem |
| 10 | Beleuchtungseinrichtung |
| 11 | Infotainmentsystem |
| 12 | Positionsbestimmungseinrichtung |
| 13 | Mobilfunkeinrichtung |
| 14 | Beleuchtungssteuergerät |
| 15, 16 | Leuchtbaugruppe |
| 20 | Satellitenbilddatenbank |
| 21 | Basisstation |
| 22 | Netzwerk |
| 30 | mobile Datenverbindung |
| 40 | Auswahleinrichtung |
| 41 | Klassifikator |
| 42 | Beleuchtungsschemendefinition |
| 50 | Bildposition |
| 51 | Umgebung |
| 52, 53 | rechter, linker Bildbereich |
| 60 | Modell |
| CAN | Controller Area Network |
| LCD | Lichtsteuerungsdaten |
| TME | Tageszeit |
| DAT | Datum |
| IMG | Satelliten- und/oder Luftbild |
| LSD | Beleuchtungsschemadatensatz |
| POS | Position |
| TMP | Temperatur |
| CLF | Klassifizieren |
| VSC | Fahrzeugumgebungsklasse |
| SEL | Auswahl |
| MOD | Modifizieren |
| TxD | Daten versenden |

## Patentansprüche

1. Steuerungssystem für eine Beleuchtungseinrichtung (10) im Fahrzeuginnenraum (2) eines Fahrzeugs (1), umfassend wenigstens ein Fahrzeugsteuergerät (11) und eine mit dem Fahrzeugsteuergerät (11) verbundene Auswahleinrichtung (40), wobei das Fahrzeugsteuergerät (11) ausgebildet ist, Positionsdaten (POS) über eine aktuelle geografische Position des Fahrzeugs (1) zu ermitteln und an die Auswahleinrichtung (40) zu kommunizieren, wobei die Auswahleinrichtung (40) ausgebildet ist, zu den Positionsdaten (POS) ein Satelliten- und/oder Luftbild (IMG) von einer Geodatenbank (20) abzurufen und wenigstens einen Bildbereich (52, 53) einer abgebildeten Umgebung zu klassifizieren, die eine Bildposition (50) zu den Positionsdaten (POS) umgibt, und wobei die Auswahleinrichtung (40) ferner ausgebildet ist, basierend auf dem wenigstens einen klassifizierten Bildbereich (52, 53) ein Beleuchtungsschema für die Beleuchtungseinrichtung (10) auszuwählen.

2. Steuerungssystem nach Anspruch 1, wobei die Auswahleinrichtung (40) ausgebildet ist, ein aktuelles Kalenderdatum (DAT) zu ermitteln und das ausgewählte Beleuchtungsschema basierend auf dem ermittelten Kalenderdatum (DAT) zu modifizieren.

3. Steuerungssystem nach Anspruch 1 oder 2, wobei die Auswahleinrichtung (40) ausgebildet ist, eine aktuelle Tageszeit (TME) zu ermitteln und das ausgewählte Beleuchtungsschema basierend auf der ermittelten Tageszeit (TME) zu modifizieren.

4. Steuerungssystem nach einem der Ansprüche 1 bis 3, wobei die Auswahleinrichtung (40) ausgebildet ist, eine Umgebungstemperatur (TMP) an der aktuellen geografischen Position (POS) des Fahrzeugs (1) zu ermitteln und das ausgewählte Beleuchtungsschema basierend auf der ermittelten Umgebungstemperatur (TMP) zu modifizieren.

5. Steuerungssystem nach einem der Ansprüche 1 bis 5, wobei die Beleuchtungseinrichtung (10) eine linke Leuchtbaugruppe (15) und eine rechte Leuchtbaugruppe (16) umfasst, wobei die linke Leuchtbaugruppe (15) an einer linken Fahrzeuginnenseite angeordnet ist, und wobei die rechte Leuchtbaugruppe (16) an einer rechten Fahrzeuginnenseite angeordnet ist, und wobei die Auswahleinrichtung (40) ausgebildet ist, einen linken Bildbereich innerhalb der abgebildeten Umgebung zu klassifizieren und einen rechten Bildbereich zu klassifizieren, wobei der linke und rechte Bildbereich durch die Positionsdaten (POS) und durch eine übermittelte Fahrtrichtungsinformation für das Fahrzeuges bestimmbar ist, so dass basierend auf dem klassifizierten linken Bildbereich ein linkes Beleuchtungsschema für die linke Leuchtbaugruppe (15) und basierend auf dem klassifizierten rechten Bildbereich ein rechtes Beleuchtungsschema für die rechte Leuchtbaugruppe (16) auswählbar ist.

6. Verfahren zur Steuerung einer Beleuchtungseinrichtung (10) im Fahrzeuginnenraum (2) eines Fahrzeugs (1), wobei Positionsdaten über eine aktuelle geografische Position des Fahrzeugs (1) ermittelt werden(101), und wobei zu den Positionsdaten ein zugehöriges Satelliten- und/oder Luftbild abgerufen wird, wobei in dem Satelliten- und/oder Luftbild wenigstens ein Bildbereich einer Umgebung klassifiziert wird (102), die eine den Positionsdaten (POS) zugeordnete Bildposition des Satelliten- und/oder Luftbilds umgibt, basierend auf dem wenigstens einen klassifizierten Bildbereich ein Beleuchtungsschema für die Beleuchtungseinrichtung (10) ausgewählt wird(103).

7. Verfahren nach Anspruch 6, wobei ein aktuelles Kalenderdatum (DAT) ermittelt wird, und wobei das ausgewählte Beleuchtungsschema basierend auf dem ermittelten Kalenderdatum (DAT) modifiziert wird (104).

8. Verfahren nach Anspruch 6 oder 7, wobei eine aktuelle Tageszeit (TME) ermittelt wird, und wobei das ausgewählte Beleuchtungsschema basierend auf der ermittelten Tageszeit (TME) modifiziert wird (105).

9. Verfahren nach einem der Ansprüche 6 bis 8, wobei eine Umgebungstemperatur (TMP) an der aktuellen geografischen Position (POS) des Fahrzeugs (1) ermittelt wird, und wobei das ausgewählte Beleuchtungsschema basierend auf der ermittelten Umgebungstemperatur (TMP) modifiziert wird (106).

10. Computerprogramm, das beim Ausführen auf einer Recheneinheit innerhalb eines Fahrzeugsteuergeräts (11) eines Fahrzeugs (1) und/oder innerhalb eines mit dem Fahrzeugsteuergerät (11) verbundenen Netzwerks (22) ausgeführt wird, die jeweilige Recheneinheit anleitet, ein Verfahren nach einem de Ansprüche 6 bis 9 auszuführen.
